# FASCICULE DE BREVET EUROPEEN

(11) **EP 2 984 375 B1**
(45) Date de publication et mention de la délivrance du brevet: **21.06.2017**
(21) Numéro de dépôt: 14710040.8
(22) Date de dépôt: 27.02.2014
(51) Int. Cl.: F16K 31/528, F02B 29/04, F02M 26/00, F16K 11/052

(54) **DISPOSITIF D'AIGUILLAGE D'UN FLUIDE POUR UNE VANNE AYANT AU MOINS TROIS VOIES**
FLUIDSCHALTVORRICHTUNG FÜR EIN VENTIL MIT MINDESTENS DREI PORTS
FLUID SWITCHING DEVICE FOR A VALVE HAVING AT LEAST THREE PORTS

(30) Priorité: 13.03.2013 FR 1352229
(43) Date de publication de la demande: 17.02.2016
(73) Titulaire: Valeo Systèmes De Contrôle Moteur, 95800 Cergy St Christophe (FR)
(72) Inventeur: HODEBOURG, Grégory, F-78500 Sartrouville (FR); MARTIN, Nicolas, F-78600 Maisonslafitte (FR)
(74) Mandataire: Tran, Chi-Hai
(86) Numéro de dépôt international: PCT/FR2014/050428
(87) Numéro de publication internationale: WO 2014/140446

(56) Documents cités:
- WO-A1-90/05869
- DE-C1- 4 231 639
- US-A- 5 448 974
- US-A1- 2010 199 957
- US-A1- 2012 272 646

## Description

L'invention se rapporte à un dispositif d'aiguillage d'un fluide pour une vanne trois voies, notamment pour une vanne de contrôle moteur.

L'invention s'applique notamment lorsque le moteur thermique est utilisé pour la propulsion d'un véhicule, par exemple d'un véhicule automobile. Il peut s'agir d'un moteur dont le carburant est de l'essence ou du diesel. La vanne peut être intégrée au circuit d'air du moteur thermique.

Au sens de l'invention, on désigne par « circuit d'air de moteur thermique » le circuit entre l'entrée d'admission et la sortie d'échappement du moteur thermique. La vanne peut être disposée dans le circuit d'admission, le circuit d'échappement, ou une boucle de recirculation par laquelle transitent les gaz d'échappement réinjectés à l'admission (EGR en anglais).

On connaît de US2010/0199957 un dispositif d'aiguillage pour une vanne trois voies. Le volet d'aiguillage est monté en rotation entre une position d'obturation du canal de dérivation et une position d'obturation d'un passage d'accès à un refroidisseur. Le déplacement de ce volet et son maintien en position d'obturation sont réalisés par deux mécanismes distincts.

Ce dispositif d'aiguillage présente l'inconvénient d'être de constitution complexe en raison d'un grand nombre de pièces impliquées, rendant leur montage compliqué et leurs interactions hasardeuses. WO9005869 décrit un dispositif d'aiguillage d'un fluide selon le préambule de la revendication 1. Il existe un besoin pour bénéficier d'un dispositif d'aiguillage qui soit relativement simple, robuste et bon marché.

L'invention vise à répondre à ce besoin.
Elle y parvient, selon l'un de ses aspects, à l'aide d'un dispositif d'aiguillage d'un fluide notamment pour une vanne ayant au moins trois voies, le dispositif comportant :
- un volet apte à pivoter entre une première position d'obturation d'une première voie et une deuxième position d'obturation d'une deuxième voie,
- un organe d'actionnement du volet apte à déplacer le volet de l'une à l'autre des positions d'obturation,
le dispositif comportant une pièce d'interface apte à interagir avec l'organe d'actionnement, le dispositif étant configuré de manière à ce que cette interaction permette sélectivement le déplacement du volet par l'organe d'actionnement et sélectivement le maintien en position du volet.

L'organe d'actionnement comprend une pièce mobile et définit un chemin de guidage guidant la pièce d'interface lors du déplacement du volet du fait du mouvement de la pièce mobile.

La pièce mobile peut être mobile en rotation. L'axe de rotation de la pièce mobile peut être parallèle à celui du volet.

Un déplacement de l'organe d'actionnement peut ainsi être transmis au volet par l'intermédiaire de la pièce d'interface. Ce déplacement de l'organe d'actionnement peut être causé par un actionneur externe, par exemple un actionneur pneumatique, hydraulique ou électrique. Cet actionneur externe peut déjà avoir pour fonction de déplacer un volet d'une autre vanne ou bien un autre volet de la même vanne. En variante, cet actionneur externe est dédié à l'entraînement de l'organe d'actionnement.

Le volet est au sens de la présente demande un volet d'aiguillage, ce qui signifie que le volet va obturer une voie afin de privilégier une autre voie d'écoulement d'un fluide, et qu'il n'est a priori pas destiné à réguler un débit de fluide dans une voie.

L'organe d'actionnement ci-dessus peut ainsi jouer à lui seul deux fonctions permettant de commander intégralement le déplacement du volet. Comme déjà évoqué, l'organe d'actionnement peut permettre le déplacement du volet. En outre, l'organe d'actionnement peut, par coopération avec la pièce d'interface, permettre le maintien en position du volet lorsque ce dernier a atteint une position souhaitée, notamment une position d'obturation.

Ainsi, un déplacement de l'organe d'actionnement peut sélectivement être transmis au volet pour déplacer ce dernier et sélectivement ne pas être transmis au volet, de sorte que ce dernier est maintenu en position. Il n'est ainsi pas nécessaire d'arrêter de façon plus ou moins brutale le déplacement de l'organe d'actionnement une fois le volet dans la position souhaitée. Ce dernier peut ainsi poursuivre son déplacement sans que cette poursuite n'ait de conséquence sur la position du volet.

Le chemin de guidage est formé par un logement de guidage ménagé à l'intérieur de la pièce mobile, ledit logement de guidage ayant deux bords latéraux opposés contre lesquels la pièce d'interface vient sélectivement en contact, lorsque le volet se déplace de l'une à l'autre des positions d'obturation. Le chemin de guidage peut être une rainure ménagée dans la pièce mobile. Ce chemin a pour effet de guider le déplacement de la pièce d'interface donc du volet. La pièce d'interface peut comporter une pièce de guidage, notamment un pion, un roulement à billes monté sur un pion, ou un ergot qui est apte à être reçu dans le chemin de guidage.

Le logement de guidage peut comprendre deux segments ayant une extrémité commune.

Le volet peut être dans une position intermédiaire dans laquelle la première et la deuxième voie sont ouvertes lorsque la pièce d'interface repose au niveau de l'extrémité commune aux deux segments du logement de guidage, le volet passant dans l'une ou l'autre des positions d'obturation lorsque la pièce d'interface se déplace dans l'un desdits segments vers son extrémité opposée à l'extrémité commune. Autrement dit, l'extrémité commune aux deux segments forme une zone dans laquelle est reçue la pièce d'interface lorsque le volet est dans une position intermédiaire.

Le chemin de guidage peut exercer une poussée sur la pièce d'interface pour déplacer le volet lorsque ladite pièce de guidage se déplace le long de la rainure depuis la position correspondant à la position intermédiaire du volet, du fait du déplacement de la pièce mobile.

Le bord latéral du segment le plus proche de l'autre segment peut s'étendre radialement au-delà de l'autre bord latéral dudit segment, au niveau de chaque extrémité opposée à l'extrémité commune d'un segment. Ceci permet à l'un des bords du chemin de guidage d'être apte à venir en contact avec la pièce d'interface alors le volet est en position d'obturation, ceci afin d'amener ladite pièce d'interface dans le chemin de guidage afin de déplacer le volet d'une position d'obturation à l'autre. En variante, cela peut permettre d'amener la pièce d'interface hors du chemin de guidage de manière à éviter un nouveau déplacement du volet.

L'organe d'actionnement définit en outre un chemin de maintien de la pièce d'interface pour maintenir le volet dans l'une ou l'autre des positions d'obturation.

Autrement dit, le maintien du volet dans l'une ou l'autre des positions d'obturation est réalisé par un chemin sur lequel l'organe d'actionnement vient coopérer avec la pièce d'interface.

Le chemin de maintien comporte un bord latéral défini par une partie du pourtour extérieur de ladite pièce mobile. Autrement dit, le chemin de maintien peut ne comporter qu'un bord latéral au contact duquel vient la pièce de guidage lorsque le volet est dans l'une des positions d'obturation. Selon une variante ne faisant pas partie de l'invention telle que revendiquée, le chemin de maintien peut être un logement ménagé à l'intérieur de ladite pièce mobile sur une partie de la périphérie de ladite pièce mobile. Autrement dit, le chemin de maintien peut former une rainure à l'intérieur de laquelle peut venir se loger la pièce de guidage lorsque le volet est dans l'une des positions d'obturation.

Le chemin de maintien et le chemin de guidage peuvent communiquer par au moins un bord latéral commun. Autrement dit, au moins un bord latéral du chemin de maintien se prolonge en un bord latéral du chemin de guidage, et réciproquement.

L'organe d'actionnement peut comporter un ressort qui est contraint au maximum lorsque le volet est dans la position intermédiaire. Le ressort peut exercer un effort par l'intermédiaire de l'une de ses extrémités, sur la pièce de guidage, notamment sur le pion ou l'ergot. Le dispositif applique au ressort la contrainte la plus forte lorsque le volet est dans la position intermédiaire.

Le ressort peut être configuré pour sélectivement maintenir en position d'obturation le volet.

Le ressort peut être un ressort de compression. Ainsi, le ressort est comprimé lorsque ledit volet est dans la position intermédiaire, ledit ressort se détendant dès que le volet amorce une rotation pour atteindre une position d'obturation de l'une desdites voies. Le ressort agit comme un dispositif d'activation destiné à faciliter la rotation du volet. En effet, dès que le volet dévie de sa position intermédiaire d'ouverture des deux voies, suite à la mise en rotation de l'organe d'actionnement, le ressort se détend en favorisant ladite rotation. En fin de course, le ressort permet de maintenir le volet dans l'une des positions d'obturation pour assurer l'étanchéité de ladite obturation. De cette manière, le volet passe d'une position d'équilibre instable correspondant à la position intermédiaire d'ouverture des deux voies, à une position d'équilibre stable correspondant à une position d'obturation.

En variante, le ressort est un ressort de traction qui est étiré lorsque le volet d'aiguillage est dans la position intermédiaire, ledit ressort se comprimant dès que le volet amorce une rotation pour atteindre une position d'obturation de l'une desdites voies.

Le dispositif peut être configuré de manière à ce que l'interaction entre la pièce d'interface et l'organe d'actionnement ne permette le maintien dans une position d'obturation du volet que par l'effet du ressort, la pièce mobile ne définissant alors qu'un chemin de guidage sans participer au maintien en position de la pièce d'interface.

La pièce mobile peut être configurée de manière à ce que le chemin de guidage ne soit en contact avec la pièce d'interface que sur un secteur angulaire limité lors de la rotation de la pièce mobile. En conséquence, la pièce mobile peut poursuivre son mouvement de rotation même après que le volet a atteint une position d'obturation, le chemin de guidage n'ayant alors plus d'effet sur la pièce d'interface donc sur le déplacement du volet.

Le volet et la pièce d'interface peuvent être des pièces distinctes rigidement couplées entre elles. Le volet et la pièce d'interface sont par exemple séparés par un joint permettant que le fluide, notamment les gaz, au contact duquel se trouve le volet ne puisse gagner la pièce d'interface et l'organe d'actionnement. Au sens de la présente demande, deux pièces sont rigidement couplées entre elles lorsqu'il n'existe aucun degré de liberté entre elles.

Dans un exemple de mise en oeuvre de l'invention, la pièce mobile en rotation comprend une came. Cette came est par exemple intégrée à un engrenage couplé à l'actionneur. Selon cet exemple, lorsque la came formant tout ou partie de la pièce mobile est déplacée en rotation par l'actionneur, une partie de sa rotation est transmise au volet pour déplacer ce dernier lorsque la pièce de guidage, notamment le pion ou l'ergot, se déplace dans le chemin de guidage ménagé dans la pièce mobile, tandis qu'une autre partie de la rotation de la came formant la pièce mobile n'est pas transmise au volet qui est alors maintenu en position lorsque la pièce d'interface est hors du chemin de guidage, et lorsqu'elle est soit libre, soit reçue dans le chemin de maintien.

Le chemin de guidage peut être ménagé entre deux pièces distinctes auquel cas le chemin de maintien est délimité par la surface extérieure d'une de ces pièces. L'une des pièces est par exemple la came ci-dessus tandis que l'autre pièce ferme le chemin de guidage.

L'axe de rotation de la pièce mobile peut être parallèle à celui du volet.

L'invention a encore pour objet, selon un autre de ses aspects, une vanne de contrôle moteur comportant un dispositif d'aiguillage tel que défini ci-dessus.

La vanne peut comprendre une voie d'entrée et deux voies de sortie, le volet étant apte à pivoter pour passer d'une position d'obturation d'une voie de sortie à une position d'obturation de l'autre voie de sortie.

En variante, la vanne peut comprendre deux voies d'entrée et une voie de sortie, le volet étant apte à pivoter pour passer d'une position d'obturation d'une voie d'entrée à une position d'obturation de l'autre voie d'entrée.

L'obturation de la voie par le volet peut être, soit complète et donc être réalisée avec une étanchéité totale, soit être partielle en tolérant un passage de fuite résiduelle de fluide, notamment de gaz

La vanne peut par exemple être utilisée dans une boucle EGR.

Une vanne ci-dessus a entre autres l'avantage de mettre en oeuvre un dispositif d'aiguillage du volet qui est simple en raison notamment du faible nombre de pièces impliquées et qui est donc peu encombrant. En outre elle peut présenter l'avantage de posséder un organe d'actionnement, notamment une roue formant une pièce mobile, qui peut poursuivre son mouvement après que le volet a atteint une position d'obturation, permettant audit organe d'actionnement de remplir une fonction supplémentaire de maintien durant cette course additionnelle, la course additionnelle pouvant être due à la reprise d'une cinématique sur une autre roue d'actionnement de la vanne.

On donne ci-après, une description détaillée, d'un mode de réalisation préféré d'une vanne de contrôle moteur selon l'invention, en se référant aux figures 1 à 4C.
- La figure 1 est une vue schématique d'une vanne de contrôle moteur comprenant un dispositif d'aiguillage selon l'invention,
- Les figures 2A, 2B, 2C, et 2D sont des vues schématiques d'un dispositif d'aiguillage selon l'invention, le volet d'aiguillage passant d'une position initiale d'ouverture des deux voies à une position d'obturation de l'une desdites voies,
- Les figures 3A, 3B, 3C, 3D et 3E sont des vues schématiques du dispositif d'aiguillage selon les figures 2A à 2D, le volet d'aiguillage passant de sa première position d'obturation vers sa deuxième position d'obturation,
- les figures 4A, 4B et 4C sont des vues schématiques du dispositif d'aiguillage selon les figures 2A à 3E, le dispositif comportant en outre un ressort de compression.

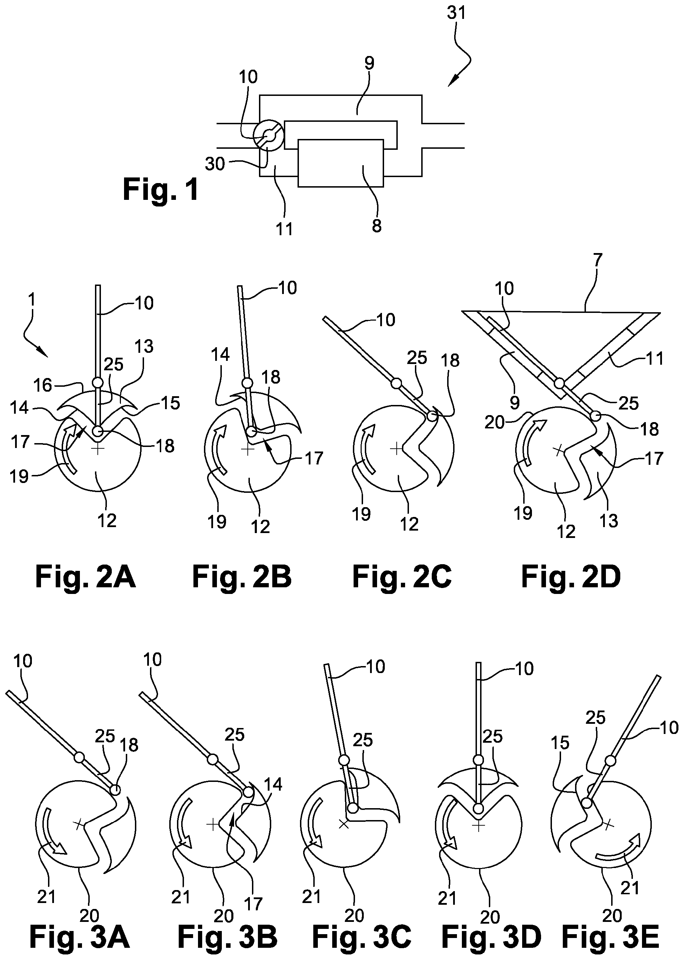

En se référant à la figure 1, est représentée une vanne 30 qui est ici une vanne de contrôle moteur dans laquelle peut être intégré un dispositif d'aiguillage 1 selon l'invention.

La vanne de contrôle moteur 30 est par exemple placée dans une boucle d'EGR 31 d'un moteur thermique. La boucle d'EGR 31 comprend la vanne 30, un refroidisseur 8 des gaz EGR et un canal de dérivation 9 desdits gaz prenant naissance en amont dudit refroidisseur 8 et débouchant en aval de ce refroidisseur 8. La vanne 30 comprend un volet d'aiguillage 10 plan et mobile en rotation, entre une première position d'obturation du canal de dérivation 9 et une deuxième position d'obturation d'un passage 11 d'accès au refroidisseur 8.

En se référant aux figures 2A à 2D, et 3A à 3E, le volet d'aiguillage10 permettant d'obturer le canal de dérivation 9 ou le passage d'accès 11 au refroidisseur 8 est rigidement lié à une pièce d'interface qui est ici une manivelle d'actionnement 25. La manivelle d'actionnement 25 est dans l'exemple considéré directement en contact avec une came 12 cylindrique. Cette came 12 a un quartier 13 déporté et elle est montée en rotation autour de son axe de révolution. Cette came 12 et ce quartier 13 sont ainsi tous deux entrainés en rotation par un actionneur électrique non représenté. Le quartier 13 de cette came 12 possédant deux rayons divergents 14,15 présentant un point d'intersection et étant reliés entre eux par un paroi courbe 16 en arc de cercle, a été reculé par rapport au reste de la came 12 pour définir un logement 17 sensiblement en forme de V. Ce logement 17 comporte deux segments ayant deux bords latéraux, les segments prenant naissance chacun en périphérie de le came 12 et convergeant l'un vers l'autre au fur et à mesure qu'ils pénètrent dans la came 12 pour se retrouver en communication au niveau de leur extrémité commune. La came 12 et le quartier 13 définissant le logement 17 constituent un ensemble rigidement couplé.

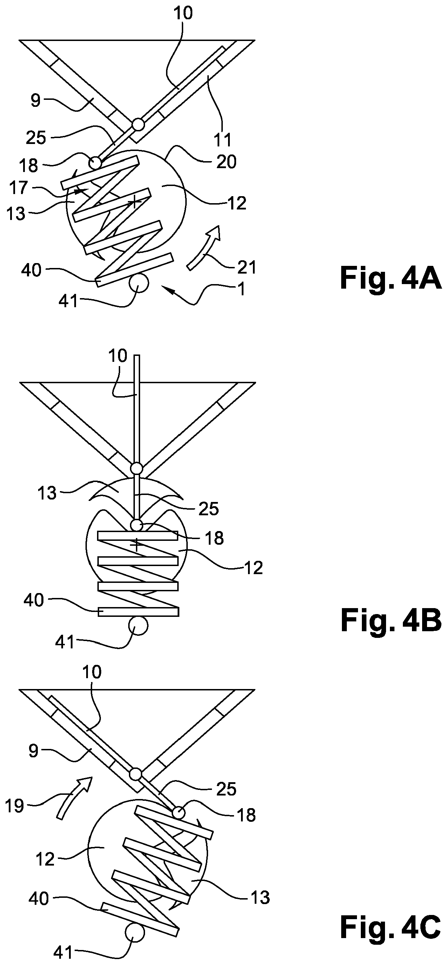

En se référant à la figure 2A, le volet d'aiguillage10 se trouve dans une position médiane d'ouverture à la fois du canal 9 de dérivation et du passage d'accès 11 au refroidisseur 8. Cette position peut être qualifiée de position d'équilibre instable. En effet, un ressort de compression 40, représenté sur les figures 4A à 4C, est monté entre l'extrémité 18 de la manivelle d'actionnement 25 et un point fixe 41. Cette extrémité 18 joue le rôle de pièce de guidage du volet 10. Le ressort 40 a tendance à se détendre donc à appliquer une force sur la pièce de guidage 18. Cet effort a tendance à entrainer la manivelle d'actionnement 25, donc le volet 10, en rotation.

L'extrémité 18 peut comprendre un pion, un ergot ou un roulement à billes monté sur un pion qui est inséré dans le logement 17, au niveau de l'extrémité commune aux deux segments. Une mise en rotation de la came 12 dans le sens de la flèche 19 entraine la rotation du volet 10. Comme représenté aux figures 4B et 4C, cette rotation est facilitée par le ressort en compression 40 qui a tendance à se détendre progressivement au fur et à mesure que la came 12 tourne dans le sens de la flèche 19, la figure 4B représentant le volet dans la position telle que représentée à la figure 2A et la figure 4C représentant le volet dans la position telle que représentée à la figure 2D. La flèche 19 représente le sens de rotation de la came 12 pour le passage du volet de la position d'équilibre instable représentée à la figure 4B à la position d'obturation du canal 9 représenté à la figure 4C.

En se référant à la figure 2B, lorsqu'il est décidé d'obturer le canal de dérivation 9, l'actionneur met en rotation l'ensemble constitué par la came 12 et le quartier 13 dans le sens adapté, matérialisé par la flèche 19. Le volet d'aiguillage 10 commence à pivoter grâce au coulissement de la pièce de guidage 18 dans un segment du logement 17, dont l'orientation a été prévue pour réaliser cette rotation spécifique du volet 10. Lors de ce mouvement, la pièce de guidage 18 est entrainée par un contact avec le bord latéral du logement 17 qui est opposé au segment 14 du quartier 13.

En se référant à la figure 2C, la rotation de la came 12 et du quartier 13 se poursuit, accentuant la rotation du volet 10 vers sa position d'obturation du canal de dérivation 9.

En se référant à la figure 2D, la pièce de guidage 18 finit par sortir du logement 17 pour se retrouver en appui contre la surface externe 20 de la came 12, cette sortie matérialisant la position d'obturation du canal de dérivation 9 par le volet d'aiguillage 10. Comme l'indique la flèche 19 montrant le sens de rotation de la came 12, ladite came 12 n'est pas brutalement stoppée une fois que le volet 10 a atteint sa position d'obturation du canal 9, mais peut au contraire continuer librement son mouvement en rotation sans perturber la position du volet d'aiguillage 10. Durant cette phase additionnelle de rotation, le volet 10 est maintenu dans sa position d'obturation du canal 9. Toujours dans cette position, comme représenté à la figure 4C, le ressort 40 maintient le volet 10 en position d'obturation du canal 9 en appliquant une force sur l'extrémité 18 de la manivelle d'actionnement 25.

En se référant à la figure 3A, lorsque le volet d'aiguillage 10 doit venir obturer le passage d'accès 11 au refroidisseur 8 depuis sa position d'obturation du canal 9 de dérivation, l'actionneur provoque la rotation de la came 12 et du quartier 13 dans le sens inverse, comme l'indique la flèche 21.

Comme le montre la figure 3B, la pièce de guidage 18 suit la surface externe 20 de la came 12 avant de venir en butée contre l'extrémité arrondie du rayon 14 du quartier 13, quartier 13 qui émerge de la came 12. Cette extrémité arrondie permet de faciliter l'entrainement de la pièce de guidage 18 à l'intérieur du logement 17.

En se référant à la figure 3C, la pièce de guidage 18 se déplace ensuite dans le logement 17, provoquant la rotation dudit volet 10. Lors de ce mouvement, la pièce de guidage 18 est entrainée par un contact avec le bord latéral 14 du logement 17.

En se référant à la figure 3D, le volet 10 repasse temporairement par une position médiane dudit volet 10 pour laquelle il ouvre le canal de dérivation 9 et le passage d'accès 11 au refroidisseur 8. Cette position est la position d'équilibre instable telle que décrite plus haut en référence à la figure 2A. En se référant à la figure 3E, la came 12 continue de tourner dans le même sens pour amener progressivement le volet 10 vers une position d'obturation du passage d'accès 11 au refroidisseur 8.

En se référant à la figure 4A, la pièce de guidage 18 finit par sortir du logement 17 pour se retrouver en appui contre la surface externe 20 de la came 12, cette sortie matérialisant la position d'obturation du passage 11 par le volet d'aiguillage 10. Comme l'indique la flèche 21 montrant le sens de rotation de la came 12, ladite came 12 n'est pas brutalement stoppée une fois que le volet 10 a atteint sa position d'obturation du passage 11, mais peut au contraire continuer librement son mouvement en rotation sans perturber la position du volet d'aiguillage10. Durant cette phase additionnelle de rotation, le volet 10 est maintenu dans sa position d'obturation. Le ressort de compression 40 maintient le volet 10 en position d'obturation en appliquant une force sur la pièce de guidage 18.

## Revendications

1. Dispositif d'aiguillage (1) d'un fluide notamment pour une vanne ayant au moins trois voies, le dispositif (1) comportant :
- un volet (10) apte à pivoter entre une première position d'obturation d'une première voie (9) et une deuxième position d'obturation d'une deuxième voie (11),
- un organe d'actionnement (12, 13, 40) du volet (10) apte à déplacer le volet (10) de l'une à l'autre des positions d'obturation,
le dispositif (1) comportant une pièce d'interface (18, 25) apte à interagir avec l'organe d'actionnement (12, 13, 40), le dispositif étant configuré de manière à ce que cette interaction permette sélectivement le déplacement du volet (10) par l'organe d'actionnement (12, 13, 40) et sélectivement le maintien en position du volet (10),
l'organe d'actionnement (12, 13, 40) comprenant une pièce mobile (12, 13) et définissant un chemin de guidage guidant la pièce d'interface (18, 25) lors du déplacement du volet (10) du fait du mouvement de la pièce mobile (12, 13), l'organe d'actionnement (12, 13) définissant en outre un chemin de maintien de la pièce d'interface (18, 25) pour maintenir le volet (10) dans l'une ou l'autre des positions d'obturation, le chemin de maintien comportant un bord latéral (20) défini par une partie du pourtour extérieur de ladite pièce mobile (12), le dispositif étant **caractérisé en ce que** le chemin de guidage est formé par un logement de guidage (17) ménagé à l'intérieur de la pièce mobile (12, 13), ledit logement de guidage (17) ayant deux bords latéraux opposés contre lesquels la pièce d'interface vient sélectivement en contact, lorsque le volet se déplace de l'une à l'autre des positions d'obturation.

2. Dispositif d'aiguillage selon la revendication 1, le logement de guidage (17) comprenant deux segments ayant une extrémité commune.

3. Dispositif d'aiguillage selon la revendication 2, le volet (10) étant dans une position intermédiaire dans laquelle la première (9) et la deuxième (10) voie sont ouvertes lorsque la pièce d'interface (18, 25) est reçue au niveau de l'extrémité commune aux deux segments du logement de guidage (17), le volet (10) passant dans l'une ou l'autre des positions d'obturation lorsque la pièce d'interface (18, 25) se déplace dans l'un desdits segments vers son extrémité opposée à l'extrémité commune.

4. Dispositif selon la revendication 2 ou 3, au niveau de chaque extrémité opposée à l'extrémité commune d'un segment, le bord latéral du segment le plus proche de l'autre segment s'étendant radialement au-delà de l'autre bord latéral dudit segment.

5. Dispositif d'aiguillage selon l'une des revendications précédentes , le chemin de maintien et le chemin de guidage communiquant par au moins un bord latéral commun.

6. Dispositif d'aiguillage selon l'une quelconque des revendications précédentes, l'organe d'actionnement (12, 13) comportant un ressort (40) qui est contraint au maximum lorsque le volet est dans une position intermédiaire d'ouverture de la première et de la deuxième voie.

7. Dispositif d'aiguillage selon la revendication 6, le ressort (40) étant configuré pour sélectivement maintenir en position d'obturation le volet.

8. Dispositif d'aiguillage selon l'une quelconque des revendications précédentes, la pièce mobile (12, 13) étant configurée de manière à ce que le chemin de guidage ne soit en contact avec la pièce d'interface (18, 25) que sur un secteur angulaire limité lors de la rotation de la pièce mobile (12, 13).

9. Dispositif d'aiguillage selon l'une quelconque des revendications précédentes, le volet (10) et la pièce d'interface (18, 25) étant des pièces distinctes rigidement couplées entre elles.

10. Vanne de contrôle moteur comportant un dispositif d'aiguillage selon l'une quelconque des revendications précédentes.

11. Vanne de contrôle moteur selon la revendication 10, comprenant une voie d'entrée (7) et deux voies de sortie (9,11), le volet étant apte à pivoter pour passer d'une position d'obturation d'une voie de sortie (9,11) à une position d'obturation de l'autre voie de sortie (9,11).

12. Vanne de contrôle moteur selon la revendication 10, comprenant deux voies d'entrée (9,11) et une voie de sortie (7), le volet (10) étant apte à pivoter pour passer d'une position d'obturation d'une voie d'entrée (9,11) à une position d'obturation de l'autre voie d'entrée (9,11).

## Patentansprüche

1. Umlenkvorrichtung (1) eines Fluids, insbesondere für ein Ventil, das mindestens drei Wege hat, wobei die Vorrichtung (1) aufweist:
- eine Klappe (10), die zwischen einer ersten Verschlussstellung eines ersten Wegs (9) und einer zweiten Verschlussstellung eines zweiten Wegs (11) schwenken kann,
- ein Betätigungsorgan (12, 13, 40) der Klappe (10), das die Klappe (10) von der einen Verschlussstellung in die andere verschieben kann,
wobei die Vorrichtung (1) ein Schnittstellenbauteil (18, 25) aufweist, das mit dem Betätigungsorgan (12, 13, 40) interagieren kann, wobei die Vorrichtung so konfiguriert ist, dass diese Interaktion selektiv die Verschiebung der Klappe (10) durch das Betätigungsorgan (12, 13, 40) und selektiv den Halt der Klappe (10) in Stellung ermöglicht,
wobei das Betätigungsorgan (12, 13, 40) ein bewegliches Bauteil (12, 13) enthält und einen Führungspfad definiert, der das Schnittstellenbauteil (18, 25) bei der Verschiebung der Klappe (10) aufgrund der Bewegung des beweglichen Bauteils (12, 13) führt,
wobei das Betätigungsorgan (12, 13) außerdem einen Haltepfad des Schnittstellenbauteils (18, 25) definiert, um die Klappe (10) in der einen oder anderen der Verschlussstellungen zu halten, wobei der Haltepfad einen Seitenrand (20) aufweist, der von einem Teil des Außenumfangs des beweglichen Bauteils (12) definiert wird, wobei die Vorrichtung **dadurch gekennzeichnet ist, dass** der Führungspfad durch eine Führungsaufnahme (17) gebildet wird, die im Inneren des beweglichen Bauteils (12, 13) ausgespart ist, wobei die Führungsaufnahme (17) zwei gegenüberliegende Seitenränder hat, gegen die das Schnittstellenbauteil selektiv in Kontakt kommt, wenn die Klappe sich von der einen Verschlussstellung zur anderen verschiebt.

2. Umlenkvorrichtung nach Anspruch 1, wobei die Führungsaufnahme (17) zwei Segmente enthält, die ein gemeinsames Ende haben.

3. Umlenkvorrichtung nach Anspruch 2, wobei die Klappe (10) in einer Zwischenstellung ist, in der der erste (9) und der zweite (10) Weg offen sind, wenn das Schnittstellenbauteil (18, 25) im Bereich des gemeinsamen Endes der zwei Segmente der Führungsaufnahme (17) aufgenommen wird, wobei die Klappe (10) in die eine oder andere der Verschlussstellungen übergeht, wenn das Schnittstellenbauteil (18, 25) sich in einem der Segmente zu seinem dem gemeinsamen Ende gegenüberliegenden Ende verschiebt.

4. Vorrichtung nach Anspruch 2 oder 3, im Bereich jedes dem gemeinsamen Ende eines Segments gegenüberliegenden Endes, wobei der Seitenrand des Segments, der dem anderen Segment am nächsten liegt, sich radial jenseits des anderen Seitenrands des Segments erstreckt.

5. Umlenkvorrichtung nach einem der vorhergehenden Ansprüche, wobei der Haltepfad und der Führungspfad durch mindestens einen gemeinsamen Seitenrand in Verbindung stehen.

6. Umlenkvorrichtung nach einem der vorhergehenden Ansprüche, wobei das Betätigungsorgan (12, 13) eine Feder (40) aufweist, die maximal gespannt ist, wenn die Klappe in einer Öffnungszwischenstellung des ersten und des zweiten Wegs ist.

7. Umlenkvorrichtung nach Anspruch 6, wobei die Feder (40) konfiguriert ist, die Klappe selektiv in Verschlussstellung zu halten.

8. Umlenkvorrichtung nach einem der vorhergehenden Ansprüche, wobei das bewegliche Bauteil (12, 13) so konfiguriert ist, dass der Führungspfad bei der Drehung des bewegliche Bauteils (12, 13) mit dem Schnittstellenbauteil (18, 25) nur über einen begrenzten Winkelsektor in Kontakt ist.

9. Umlenkvorrichtung nach einem der vorhergehenden Ansprüche, wobei die Klappe (10) und das Schnittstellenbauteil (18, 25) getrennte Bauteile sind, die starr miteinander gekoppelt sind.

10. Motorsteuerventil, das eine Umlenkvorrichtung nach einem der vorhergehenden Ansprüche aufweist.

11. Motorsteuerventil nach Anspruch 10, das einen Eingangsweg (7) und zwei Ausgangswege (9, 11) enthält, wobei die Klappe schwenken kann, um von einer Verschlussstellung eines Ausgangswegs (9, 11) in eine Verschlussstellung des anderen Ausgangswegs (9, 11) überzugehen.

12. Motorsteuerventil nach Anspruch 10, das zwei Eingangswege (9, 11) und einen Ausgangsweg (7) enthält, wobei die Klappe (10) schwenken kann, um von einer Verschlussstellung eines Eingangswegs (9, 11) in eine Verschlussstellung des anderen Eingangswegs (9, 11) überzugehen.

## Claims

1. Fluid switching device (1) in particular for a valve having at least three ports, the device (1) comprising:
- a flap (10) that is able to pivot between a first position blocking a first port (9) and a second position blocking a second port (11),
- an element (12, 13, 40) for actuating the flap (10), which is able to move the flap (10) from one blocking position to the other,
the device (1) comprising an interface part (18, 25) that is able to interact with the actuating element (12, 13, 40), the device being configured such that this interaction permits, selectively, displacement of the flap (10) by the actuating element (12, 13, 40) and, selectively, holding the flap (10) in position,
the actuating element (12, 13, 40) comprising a movable part (12, 13) and defining a guiding track which guides the interface part (18, 25) during displacement of the flap (10) owing to the movement of the movable part (12, 13),
the actuating element (12, 13) further defining a track for holding the interface part (18, 25) to hold the flap (10) in one or other of the blocking positions, the holding track comprising a lateral edge (20) defined by part of the outer periphery of said movable part (12), the device being **characterized in that**
the guiding track is formed by a guiding recess (17) created within the movable part (12, 13), said guiding recess (17) having two opposite lateral edges against which the interface part comes selectively into contact when the flap moves from one blocking position to the other.

2. Switching device according to claim 1, the guiding recess (17) comprising two segments having a common end.

3. Switching device according to claim 2, the flap (10) being in an intermediate position in which the first (9) and second (10) ports are open when the interface part (18, 25) is received at the end common to both segments of the guiding recess (17), the flap (10) entering one or other of the blocking positions when the interface part (18, 25) moves in one of said segments to its end opposite the common end.

4. Device according to claim 2 or 3, at each end opposite the common end of a segment, the lateral edge of the segment closest to the other segment extending radially beyond the other lateral edge of said segment.

5. Switching device according to one of the preceding claims, the holding track and the guiding track communicating by at least one common lateral edge.

6. Switching device according to any one of the preceding claims, the actuating element (12, 13) comprising a spring (40) which is fully compressed when the flap is in an intermediate opening position of the first and second ports.

7. Switching device according to claim 6, the spring (40) being configured to selectively hold the flap in a blocking position.

8. Switching device according to any one of the preceding claims, the movable part (12, 13) being configured such that the guiding track is in contact with the interface part (18, 25) only over a limited angular sector during rotation of the movable part (12, 13).

9. Switching device according to any one of the preceding claims, the flap (10) and the interface part (18, 25) being distinct parts that are rigidly coupled to one another.

10. Engine control valve comprising a switching device according to any one of the preceding claims.

11. Engine control valve according to claim 10, comprising an inlet port (7) and two outlet ports (9, 11), the flap being able to pivot so as to pass from a position blocking one outlet port (9, 11) to a position blocking the other outlet port (9, 11).

12. Engine control valve according to claim 10, comprising two inlet ports (9, 11) and an outlet port (7), the flap (10) being able to pivot so as to pass from a position blocking one inlet port (9, 11) to a position blocking the other inlet port (9, 11).
